# EUROPEAN PATENT SPECIFICATION

(11) **EP 1 931 132 B1**
(45) Date of publication and mention of the grant of the patent: **09.12.2009**
(21) Application number: 07119184.5
(22) Date of filing: 24.10.2007
(51) Int. Cl.: H04N 5/225

(54) **Double hinge monitor mount**
Bildschirmhalterung mit Doppelgelenk
Montage de moniteurs à double charnière

(30) Priority: 04.12.2006 EP 06301209
(43) Date of publication of application: 11.06.2008
(73) Proprietor: Thomson Licensing, 92100 Boulogne-Billancourt (FR)
(72) Inventor: Bos, Noortje, 5616 NZ Eindhoven (NL); Schmit, Erwin, 2517 TM Den Haag (NL); Duchenne, Milan, 3031 SP Rotterdam (NL)
(74) Representative: Lindemann, Robert

(56) References cited:
- EP-A- 1 509 039
- EP-A1- 0 708 557
- JP-A- 9 163 191

## Description

The invention relates to a monitor mount in a camera, in particular to a mount for a flat screen monitor, e.g. an LCD monitor.

Modern video cameras for consumer or professional use are provided with a monitor as a viewfinder and for watching the recording. The screen may be relatively large, and it is desirable to have a screen that can be moved into various directions, allowing for putting the screen in a position such that the camera operator always has a good view of the scene that is recorded, no matter how the camera is held. A movable screen further has the advantage of allowing for putting the screen in a position where ambient light does not affect the visibility and readability of what is reproduced on the screen. The terms screen and monitor are used synonymously throughout the specification, unless otherwise stated.

Consumer video cameras often provide a screen that can be adjusted flush with the housing when in travelling position. A single hinge is provided to open the screen towards the user. Some consumer video cameras also provide a pivoting means with the single hinge, allowing for further rotating the screen to a convenient viewing position when fully opened, or for swivelling the screen by 180 degrees and then folding the screen back into the housing. However, once the screen is fully opened, a force applied to the hinge trying to further open the screen may lead to breaking either the screen or the hinge, causing severe damage to the camera. Such a camera is disclosed e.g. in EP 0 708 557 A1.

JP 9-163191 A discloses a display screen attached to a double hinge, allowing for an increased angle of rotation of the monitor.

EP 1 509 039 A1 discloses an image capturing apparatus in which a screen is mounted rotatably along the optical axis of the camera, allowing for positioning the monitor on both sides of the camera. When not used, the monitor is placed in a recess flush with the surface of the housing.

In a video camera it is, therefore, desired to have an improved foldable monitor or screen which, when in travelling position, is in a position flush with then housing. It is further desired to allow for a movement of the monitor corresponding to opening the monitor wider than 90 degrees. Yet further a rotation of the monitor orthogonal to the hinge axis is also desirable.

These and other objects are achieved by a monitor mounting assembly as defined in independent claim 1. Advantageous developments and embodiments are defined in the dependent claims.

A monitor mounting assembly according to a first aspect of the invention has a first hinge arranged in a recess of a housing. A monitor is arranged flush with the housing inside the recess in a first position. The monitor can be arranged in a second position by rotating the monitor around the axis of rotation of the first hinge. The angle of rotation of the first hinge lies essentially between 0° and 90° degrees. A second hinge is provided that has an axis of rotation in a plane essentially parallel to the axis of rotation of the first hinge. The second hinge is arranged outside the recess of the housing when the first hinge is substantially fully opened. Thus, when the maximum opening angle of the first hinge is reached, the second hinge allows for further opening the screen.

The angle of rotation of the first hinge may be limited by a mechanical stop. The mechanical stop may be provided by the rim of the recess.

In one embodiment of the invention the second hinge is arranged at a distance from the first hinge equal or larger than the sum of the distance between the axis of rotation of the first hinge and the outer surface of the housing and the distance between the axis of rotation of the second hinge and the outer surface of the monitor. This allows for folding the monitor towards the outer surface of the housing until the monitor lies essentially flat against the housing.

In a preferred embodiment the torques required for operating the first and the second hinge are set to be noticeably different from each other. The torque required for operating the first hinge is set to be lower than the torque required for operating the second hinge, thereby ensuring that during normal operation the first hinge is fully opened before the second hinge comes into action. This also provides a properly defined way of operation, which may be desirable for giving a sturdier and more reliable impression to an operator. The noticeable difference in the torques for operating preferably exceeds mere differences due to production tolerances.

In another embodiment a mechanical resistance is provided with the second hinge. The mechanical resistance can be overcome by applying a torque noticeably exceeding the torque required for normally operating the second hinge. This ensures that, during normal operation, the monitor is rotated only about the first hinge, while providing a further movement as a safety feature. In case the monitor is fully rotated open about the first hinge and a person or object unintendedly collides with the monitor, applying a force in a direction so as to further open the monitor, the second hinge provides for the required movement. This further movement of the monitor can prevent a camera equipped with the inventive monitor mounting assembly from toppling over, or the monitor or hinge from breaking, while not affecting the normal use. In one embodiment, the mechanical resistance is provided by a spring-loaded or flexible pin engaging with a notch. In another embodiment the mechanical resistance is provided by the second hinge being spring-loaded in axial direction and having a pin or a notch, the pin or notch engaging with a corresponding notch or pin.

In a development of the invention a swivel joint is provided for rotating the monitor around an axis of rotation orthogonal to the axes of rotation of the first and the second hinge. This additional joint allows for rotating the screen when opened, providing additional ways of orienting the monitor, e.g. for avoiding ambient light influencing the readability of the monitor. This additional joint also allows for rotating the monitor by 180 degrees and folding it back into the recess of the housing so that it is fully visible yet flush with the housing.

In one embodiment of the development, the swivel joint connects the first and the second hinge.

The invention will be described in greater detail with reference to the drawing, in which
- Figure 1: shows a diagrammatic side view of a camera with a monitor mount assembly according to a first embodiment of the invention;
- Figure 2: shows a diagrammatic side view of the camera and monitor mount assembly of figure 1 with the monitor in a different position;
- Figure 3: shows a diagrammatic side view of a camera with a monitor mount assembly according to a second embodiment of the invention;
- Figure 4: shows a diagrammatic side view of the camera and monitor mount assembly of figure 3 with the monitor in a second position;
- Figure 5: shows a detail of the monitor mount assembly in three different positions in a sectional view;
- Figure 6: is a perspective view of a detail of the monitor mount assembly according to the invention;
- Figure 7: is a perspective view of an exemplary hinge assembly used in the monitor mount assembly according to the invention; and
- Figure 8: diagrammatically shows the position of the exemplary hinge assembly of figure 7 in the monitor mount assembly according to the invention.

In the drawing, same or similar elements are referenced by the same reference symbols.

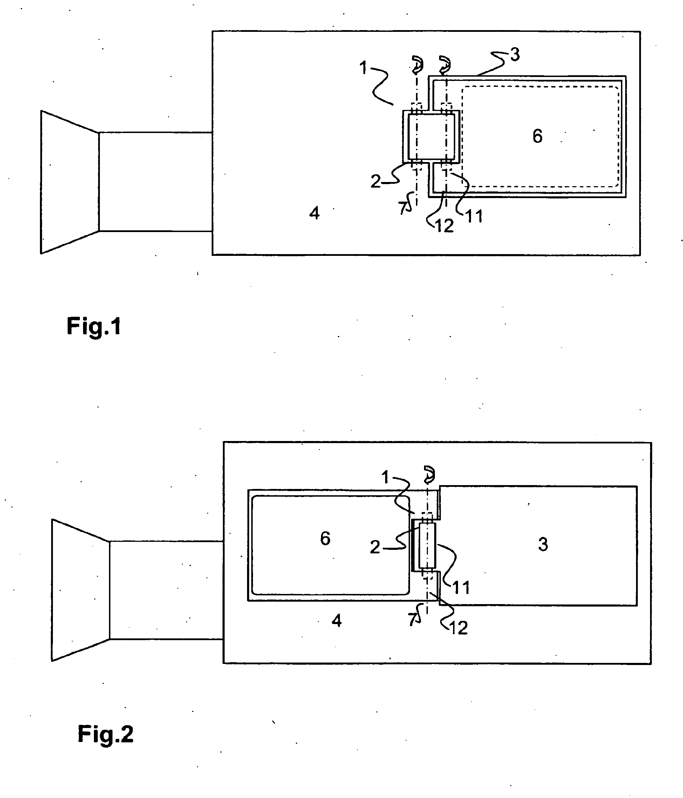

Figure 1 shows a diagrammatic side view of a camera with a monitor mount assembly 1 according to a first embodiment of the invention in a first position. The monitor mount assembly includes a first hinge 2 and a second hinge 11 arranged in a recess 3 of a housing 4. The recess 3 is shown as a rectangular line surrounding the monitor mount assembly 1 and a monitor 6. The monitor 6 is shown from its rear side, indicated by the dashed line. The axes of rotation 7, 12 first and the second hinge 2, 11 are indicated by the dash-dotted line and the curved arrows depicting the rotation.

Figure 2 shows a diagrammatic side view of the camera with a monitor mount assembly 1 of figure 1 with the monitor 6 in a second position. The monitor 6 is now fully opened and the rear side of the monitor 6 lies flush with the housing 4. The recess 3 is now empty. The first and the second hinge 2, 11 are now arranged one over the other, as are the axes of rotation 7, 12. The position of the first and second hinge 2, 11 is indicated by the single visible hinge and the single visible axis of rotation. This position of the monitor 6 may have been achieved by first fully turning the monitor 6 around the first hinge 2 and then turning the monitor 6 around the second hinge 11. The first hinge 2 may not be opened further, as will be discussed later.

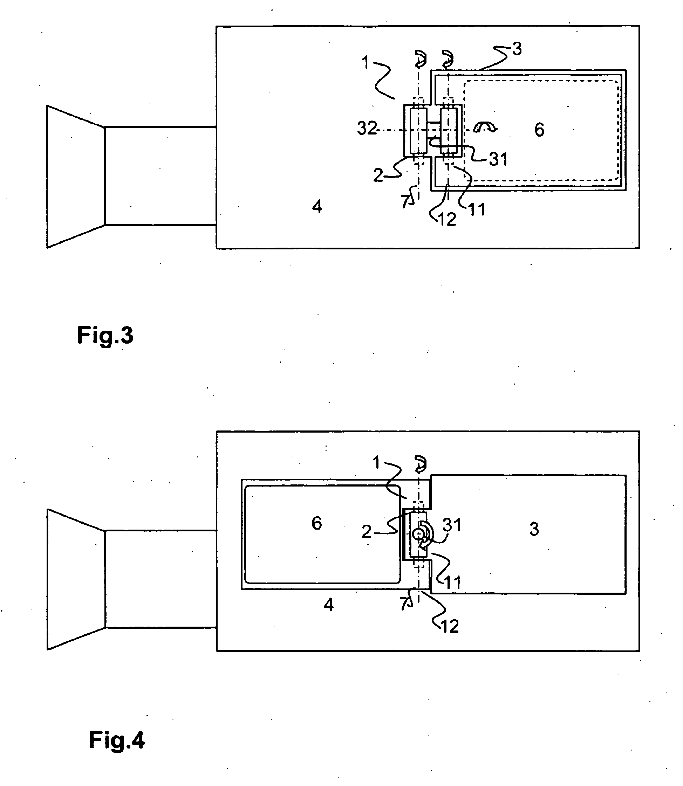

Figure 3 shows a diagrammatic side view of a camera with a monitor mount assembly 1 according to a second embodiment of the invention in a first position. The elements are essentially the same as discussed in figures 1 and 2. An additional swivel joint 31 is provided in the monitor mount assembly 1. The swivel joint 31 has an axis of rotation 32 essentially orthogonal to the axes of rotation 7, 12 of the first and the second hinge 2, 11. The possible rotation of the swivel joint 31 is indicated by the curved arrow.

Figure 4 shows a diagrammatic side view of the camera with a monitor mount assembly 1 of figure 3 in a second position. This figure is similar to figure 2 and shows corresponding elements. The swivel joint 31 is shown in a position that allows for turning the monitor 6 in a plane parallel to the surface of the drawing, as also indicated by the curved arrow. If the monitor 6 were set in a position corresponding to a fully opened first hinge 2, the swivel joint 31 would allow for changing the angle of the front side of the monitor 6 with respect to a user behind the camera (not shown in the figure). This embodiment also allows for arranging the monitor 6 such that is faces towards the outside of the recess 3, while being arranged inside the recess 3 (not shown in the figure).

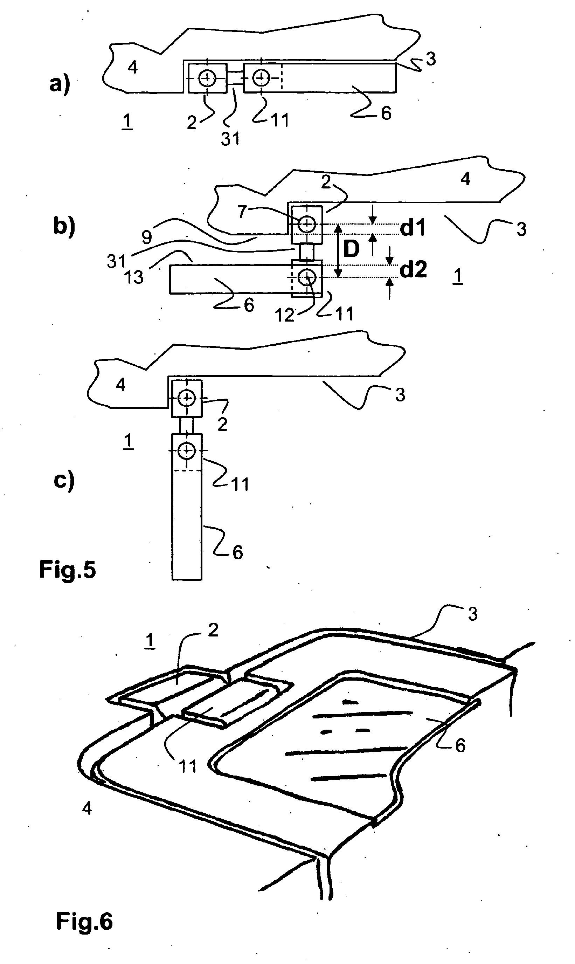

Figure 5 shows a detail of the monitor mount assembly 1 in three different positions in a sectional view. In figure 5a) the monitor 6 is arranged flush with the housing 4 inside the recess 3. The first and the second hinge 2, 11 are also arranged inside the recess 3. The first and the second hinge 2, 11 are linked by the swivel joint 31. The monitor 6 may face to the inside of the recess 3 or to the outside. In figure 5b) the first and the second hinge 2, 11 are fully opened, and the monitor 6 lies flush with the housing 4 outside the recess 3. The minimum distance D between the first and the second hinge 2, 11 equals the sum of the distance d1 between the axis of rotation 7 of the first hinge 2 and the outer surface 9 of the housing and the distance d2 between the axis of rotation 12 of the second hinge 11 and the outer surface 13 of the monitor 6. In the drawing, the outer surface 13 of the monitor 6 is facing towards the outer surface 9 of the housing 4. It is to be noted that the distances shown in the figure are exaggerated for clarity reasons. However, the distance between the first and the second hinge 2, 11 may deliberately be chosen to be larger as the minimum required distance. Figure 5c) shows the monitor 6 in a normal position, facing towards the user of the camera (not shown in the figure).

Figure 6 is a perspective view of a detail of the monitor mount assembly 1 according to the invention. The monitor 6 is arranged inside the recess 3 of the housing 4, facing outside. The first and second hinge 2, 11 are also arranged inside the recess 3.

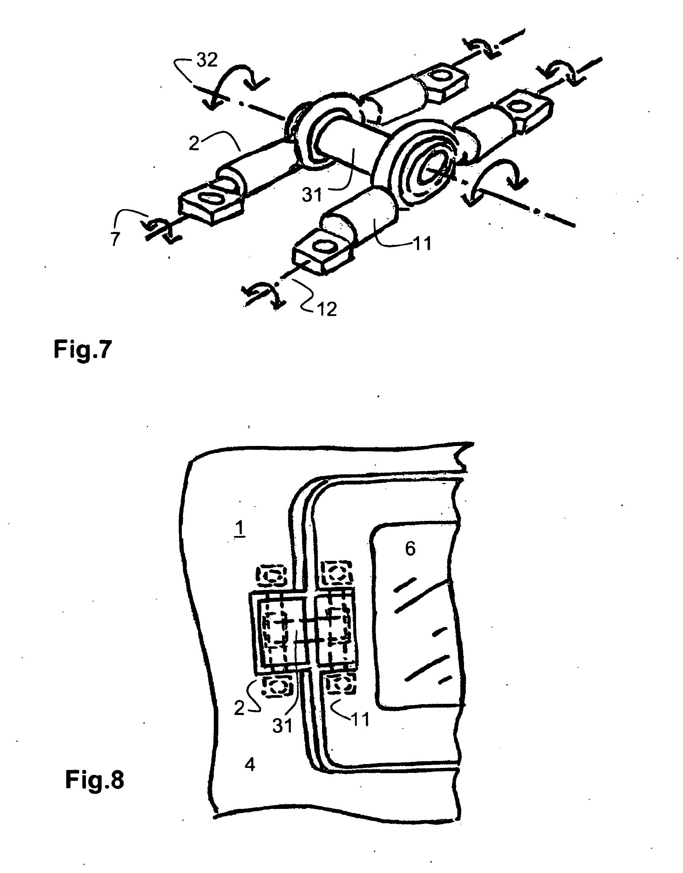

Figure 7 is a perspective view of an exemplary hinge assembly used in the monitor mount assembly 1 according to the invention. A first and second hinge 2, 11 and their axes of rotation 7, 12 are shown, indicated by the curved arrows. A swivel joint 31 is provided, connecting the first and the second hinge 2, 11. The axis of rotation 32 of the swivel joint 31 is also indicated in the figure.

Figure 8 diagrammatically shows how the exemplary hinge assembly of figure 7 is arranged in the monitor mount assembly 1 according to the invention. The dashed lines indicate that the hinge assembly is at least partly covered by the housing 4 and the monitor 6. The first and the second hinge 2, 11 as well as the swivel joint 31 are shown in the figure.

Although the invention has been described with reference to a monitor mount for a camera it will be obvious to the person skilled in the art to use the invention in other applications in which a monitor is to be foldable arranged in a recess while allowing a large degree of movement.

## Claims

1. Monitor mounting assembly (1) having a first hinge (2) arranged in a recess (3) of a housing (4), wherein a monitor (6) is arranged flush with the housing (4) inside the recess (3) in a first position, and wherein the monitor (6) can be arranged in a second position by rotating the monitor (6) around the axis of rotation (7) of the first hinge (2), the angle of rotation lying essentially between 0° and 90°, **characterised in that** a second hinge (11) is provided having an axis of rotation (12) in a plane essentially parallel to the axis of rotation (7) of the first hinge (2), wherein the second hinge (11) is arranged outside the recess (3) of the housing (4) when the first hinge (2) is substantially fully opened, and **in that** the torques required for operating the first and the second hinge (2, 11) are set to be noticeably different from each other.

2. Monitor mounting assembly (1) according to claim 1, **characterised in that** the torque required for operating the first hinge (2) is lower than the torque required for operating the second hinge (11).

3. Monitor mounting assembly (1) according to claim 1, **characterised in that** the angle of rotation of the first hinge (2) is limited by a mechanical stop, in particular by the rim (8) of the recess (3).

4. Monitor mounting assembly (1) according to claim 1, **characterised in that** the second hinge (11) is arranged at a distance (D) from the first hinge (2) equal or larger than the sum of the distance (d1) between the axis of rotation (7) of the first hinge (2) and the outer surface (9) of the housing (4) and the distance (d2) between the axis of rotation (12) of the second hinge (11) and the outer surface (13) of the monitor (6).

5. Monitor mounting assembly (1) according to any one of the preceding claims **characterised in that** a mechanical resistance is provided with the second hinge (11), wherein the mechanical resistance can be overcome by applying a torque noticeably exceeding the torque required for normally operating the second hinge (11).

6. Monitor mounting assembly (1) according to claim 5 **characterised in that** the mechanical resistance is provided by a spring-loaded or flexible pin engaging with a notch.

7. Monitor mounting assembly (1) according to claim 5 **characterised in that** the mechanical resistance is provided by the second hinge (11) being spring-loaded in axial direction and having a pin or a notch, the pin or notch engaging with a corresponding notch or pin.

8. Monitor mounting assembly (1) according to any one of the preceding claims **characterised in that** a swivel joint (31) is provided for rotating the monitor (6) around an axis of rotation (32) orthogonal to the axes of rotation (7, 12) of the first and the second hinge.

9. Monitor mounting assembly (1) according to claim 8, **characterised in that** the pivoting swivel joint (31) connects the first and the second hinge (2, 11).

## Patentansprüche

1. Bildschirmhalterungsbaueinheit (1) mit einem ersten Gelenk (2), das in einer Aussparung (3) eines Gehäuses (4) angeordnet ist, wobei ein Bildschirm (6) in einer ersten Stellung bündig mit dem Gehäuse (4) in der Aussparung (3) angeordnet ist und wobei der Bildschirm (6) dadurch, dass er um die Drehachse (7) des ersten Gelenks (2) gedreht wird, in einer zweiten Stellung angeordnet werden kann, wobei der Drehwinkel im Wesentlichen zwischen 0° und 90° liegt, **dadurch gekennzeichnet, dass** ein zweites Gelenk (11) vorgesehen ist, das eine Drehachse (12) in einer Ebene aufweist, die im Wesentlichen parallel zur Drehachse (7) des ersten Gelenks (2) ist, wobei das zweite Gelenk (11) außerhalb der Aussparung (3) des Gehäuses (4) angeordnet ist, wenn das erste Gelenk (2) im Wesentlichen vollständig geöffnet ist, und dadurch, dass die zum Betätigen des ersten und des zweiten Gelenks (2, 11) erforderlichen Drehmomente so eingestellt sind, dass sie deutlich unterschiedlich voneinander sind.

2. Bildschirmhalterungsbaueinheit (1) nach Anspruch 1, **dadurch gekennzeichnet, dass** das zum Betätigen des ersten Gelenks (2) erforderliche Drehmoment kleiner als das zum Betätigen des zweiten Gelenks (11) erforderliche Drehmoment ist.

3. Bildschirmhalterungsbaueinheit (1) nach Anspruch 1, **dadurch gekennzeichnet, dass** der Drehwinkel des ersten Gelenks (2) durch einen mechanischen Anschlag, insbesondere durch den Rand (8) der Aussparung (3), begrenzt ist.

4. Bildschirmhalterungsbaueinheit (1) nach Anspruch 1, **dadurch gekennzeichnet, dass** das zweite Gelenk (11) in einer Entfernung (D) von dem ersten Gelenk (2) angeordnet ist, die gleich der oder größer als die Summe der Entfernung (d1) zwischen der Drehachse (7) des ersten Gelenks (2) und der Außenoberfläche (9) des Gehäuses (4) und der Entfernung (d2) zwischen der Drehachse (12) des zweiten Gelenks (11) und der Außenoberfläche (13) des Bildschirms (6) ist.

5. Bildschirmhalterungsbaueinheit (1) nach einem der vorhergehenden Ansprüche, **dadurch gekennzeichnet, dass** bei dem zweiten Gelenk (11) ein mechanischer Widerstand vorgesehen ist, wobei der mechanische Widerstand durch Anwenden eines Drehmoments, das das zum normalen Betätigen des zweiten Gelenks (11) erforderliche Drehmoment deutlich übersteigt, überwunden werden kann.

6. Bildschirmhalterungsbaueinheit (1) nach Anspruch 5, **dadurch gekennzeichnet, dass** der mechanische Widerstand durch einen federbelasteten oder elastischen Stift vorgesehen ist, der mit einer Kerbe in Eingriff ist.

7. Bildschirmhalterungsbaueinheit (1) nach Anspruch 5, **dadurch gekennzeichnet, dass** der mechanische Widerstand dadurch vorgesehen ist, dass das zweite Gelenk (11) in axialer Richtung federbelastet ist und einen Stift oder eine Kerbe aufweist, wobei der Stift oder die Kerbe mit einer entsprechenden Kerbe oder mit einem entsprechenden Stift in Eingriff ist.

8. Bildschirmhalterungsbaueinheit (1) nach einem der vorhergehenden Ansprüche, **dadurch gekennzeichnet, dass** ein Drehgelenk (31) vorgesehen ist, um den Bildschirm (6) um eine zu den Drehachsen (7, 12) des ersten und des zweiten Gelenks orthogonale Drehachse (32) zu drehen.

9. Bildschirmhalterungsbaueinheit (1) nach Anspruch 8, **dadurch gekennzeichnet, dass** das Drehgelenk (31) das erste und das zweite Gelenk (2, 11) verbindet.

## Revendications

1. Ensemble de montage de moniteur (1) possédant une première charnière (2) disposée dans un renfoncement (3) d'un logement (4), où un moniteur (6) est disposé dans le prolongement du logement (4) à l'intérieur du renfoncement (3) dans une première position, et où le moniteur (6) peut être disposé dans une deuxième position via la rotation du moniteur (6) autour de l'axe de rotation (7) de la première charnière (2), l'angle de rotation se situant essentiellement entre 0 et 90 degrés, **caractérisé en ce qu'**une deuxième charnière (11) est fournie avec un axe de rotation (12) dans un plan essentiellement parallèle à l'axe de rotation (7) de la première charnière (2), où la deuxième charnière (11) est disposée en dehors du renfoncement (3) du logement (4) lorsque la première charnière (2) est presque totalement ouverte, et **en ce que** les couples de serrage requis pour le fonctionnement de la première et de la deuxième charnière (2, 11) sont définis comme étant nettement différents l'un de l'autre.

2. Ensemble de montage de moniteur (1) selon la revendication 1, **caractérisé en ce que** le couple de serrage requis pour le fonctionnement de la première charnière (2) est inférieur au couple de serrage requis pour le fonctionnement de la deuxième charnière (11).

3. Ensemble de montage de moniteur (1) selon la revendication 1, **caractérisé en ce que** l'angle de rotation de la première charnière (2) est limité par un arrêt mécanique, en particulier par le bord (8) du renfoncement (3).

4. Ensemble de montage de moniteur (1) selon la revendication 1, **caractérisé en ce que** la deuxième charnière (11) est disposée à une distance (D) de la première charnière (2) égale ou supérieure à la somme de la distance (d1) entre l'axe de rotation (7) de la première charnière (2) et la surface extérieure (9) du logement (4) et de la distance (d2) entre l'axe de rotation (12) de la deuxième charnière (11) et la surface extérieure (13) du moniteur (6).

5. Ensemble de montage de moniteur (1) selon une quelconque des revendications précédentes, **caractérisé en ce qu'**une résistance mécanique est fournie avec la deuxième charnière (11), où la résistance mécanique peut être surmontée via l'application d'un couple de serrage dépassant sensiblement le couple de serrage requis pour un fonctionnement normal de la deuxième charnière (11).

6. Ensemble de montage de moniteur (1) selon la revendication 5, **caractérisé en ce que** la résistance mécanique est fournie par une goupille à ressort ou flexible engagée à l'aide d'une encoche.

7. Ensemble de montage de moniteur (1) selon la revendication 5, **caractérisé en ce que** la résistance mécanique est fournie par la deuxième charnière (11) dotée d'un ressort dans la direction axiale et possédant une goupille ou une encoche, la goupille ou l'encoche étant engagée à l'aide d'une goupille ou d'une encoche correspondante.

8. Ensemble de montage de moniteur (1) selon une quelconque des revendications précédentes, **caractérisé en ce qu'**un joint articulé (31) est fourni pour faire pivoter le moniteur (6) autour d'un axe de rotation (32) orthogonal par rapport aux axes de rotation (7, 12) de la première et de la deuxième charnière.

9. Ensemble de montage de moniteur (1) selon la revendication 8, **caractérisé en ce que** le joint articulé pivotant (31) connecte la première et la deuxième charnière (2, 11).
